# EUROPEAN PATENT SPECIFICATION

(11) **EP 2 378 590 B1**
(45) Date of publication and mention of the grant of the patent: **03.04.2013**
(21) Application number: 11151235.6
(22) Date of filing: 18.01.2011
(51) Int. Cl.: H01M 2/02, H01M 2/10, H01M 2/20, H01M 10/04

(54) **Secondary battery**
Sekundärbatterie
Batterie secondaire

(30) Priority: 12.04.2010 US 323274 P
(43) Date of publication of application: 19.10.2011
(73) Proprietor: Samsung SDI Co., Ltd., Suwon-si, Gyeonggi-do 443-731 (KR)
(72) Inventor: Park, Sin-Young, Gyeonggi-do (KR)
(74) Representative: Gulde Hengelhaupt Ziebig & Schneider

(56) References cited:
- WO-A1-2009/136240
- US-A- 5 200 280
- US-A1- 2003 059 670
- US-A1- 2005 031 940
- US-A1- 2008 206 628

## Description

The embodiment relates to a secondary battery, and more specifically, to a secondary battery capable of easily welding a plurality of taps of a plurality of jelly-rolls to cans when implementing a medium and large battery with the jelly-rolls.

### Technical Background of the invention

Secondary batteries can be repeatedly charged and discharged unlike primary batteries which cannot be repeatedly charged. A low-capacity secondary battery configured of one cell is used for portable small electronic devices, such as mobile phones, notebook computers, and camcorders and a large-capacity secondary battery where a plurality of battery cells are connected in a pack form has been interested as a power supply for driving a motor such as a hybrid electric car, etc.

The large-capacity secondary batteries, which are connected with each other in series to drive a motor in an electric vehicle, etc. requiring high power, may be constituted as a battery module. Therefore, a study on a large-capacity battery has been actively progressed.

However, when a module constituted by a plurality of small batteries is implemented as the large-capacity secondary battery, there is a disadvantage in that weight and costs are increased. In addition, in the case of the large-capacity secondary battery, capacity per unit cell is increased, which may largely damage the stability of the battery and involve additional costs for implementing the same performance.

US 5,200,280 A and WO 2009/136240 A1 disclose secondary batteries including jelly-rolls and insulator plates fixing the position of the jelly-rolls and having holes through which the electrode tabs of the jelly-rolls pass.

### Summary of Invention

An embodiment of the present invention is to provide a secondary battery capable of easily welding a plurality of taps of jelly-rolls to cans by an insulator including spacers that can fix each jelly-roll when implementing a medium and large battery with the plurality of jelly-rolls.

According to the present invention there is provided a secondary battery comprising:
a plurality of jelly-rolls comprising an anode, a cathode and a separator placed there between, wherein each jelly-roll includes first and second electrode tabs extending from the jelly-roll; and
at least one insulator plate having at least one hole through which at least one of the electrode tabs passes and wherein the insulator plate comprises a spacer for each jelly-roll so as to fix the jelly-rolls in a predetermined position. Preferably, the jelly-rolls have a circular shape or a polygonal shape.

The spacers may protrude from one side of the insulator plate or the spacers are depressed into one side of the insulator plate.

The battery may further include first and second insulator plates and the jelly-rolls are positioned in between the first and second insulator plates.

The battery further comprises a battery case and a cap plate assembly enclosing the at least one insulator plate and jelly-rolls, wherein the second electrode tab of each jelly-roll contacts the battery case, and the first electrode tab of each jelly-roll contacts the cap plate assembly. The cap plate assembly may comprise a cap plate; and an electrode lead for each jelly-roll, wherein the first electrode tab of each jelly-roll contacts the corresponding electrode lead. In alternative, the cap plate assembly comprises a connection body, wherein the first electrode tab of each jelly-roll contacts the connection body; and an electrode lead is connected to the connection body. The cap plate assembly may then further comprise an insulator plate formed between the connection body and the cap plate.

The cap plate assembly may have a gasket so as to insulate the electrode lead from the cap plate.

One insulator plate may comprise all the holes for the first and second electrode tabs of each jelly-roll.

As described above, according to the present invention, when implementing the medium and large battery with the plurality of jelly-rolls, the plurality of taps of the jelly-rolls can be easily welded to the cans by the insulator including the spacers that can fix each jelly-roll, thereby making it possible to protect the battery cell having low mechanical strength as well as prevent the deformation of the jell-rolls.

Further, when welding the plurality of jell-rolls, the accurate positioning and assembling are simplified such that it is easy to manufacture the battery cell, thereby making it possible to increase the structural stability of the battery.

In addition, the overall manufacturing costs can be lowered and when the jelly-rolls are exploded, all the battery cells are not exploded but only one jelly-roll is exploded, thereby making it possible to improve the stability.

### Brief Description of the Drawings

FIG. 1 is an exploded perspective view illustrating jelly-rolls and insulators;
FIG. 2 is a perspective view illustrating a state where the jelly-rolls and the insulators of FIG. 1 are coupled with each other;
FIG. 3 is a perspective view illustrating a state where the insulator and the jelly-rolls are coupled with each other;
FIG. 4 is a perspective view illustrating a secondary battery
FIG. 5A is a cross-sectional view taken along line A-A' of FIG. 4.
FIG. 5B is a cross-sectional view taken along line B-B' of FIG. 4.
FIG. 6 is a perspective view illustrating a secondary battery according to the present invention;
FIG. 7 is an exploded perspective view illustrating a state where the insulator and the jelly-rolls are coupled with each other;
FIG. 8 is a perspective view illustrating a state where the insulator and the jelly-rolls are coupled with each other; and
FIG. 9 is a perspective view illustrating a state where the insulator and the jelly-rolls are coupled with each other.

### Detailed Description of the Invention

Hereinafter, a secondary battery according to embodiments of the present invention will be described in detail with reference to the accompanying drawings.

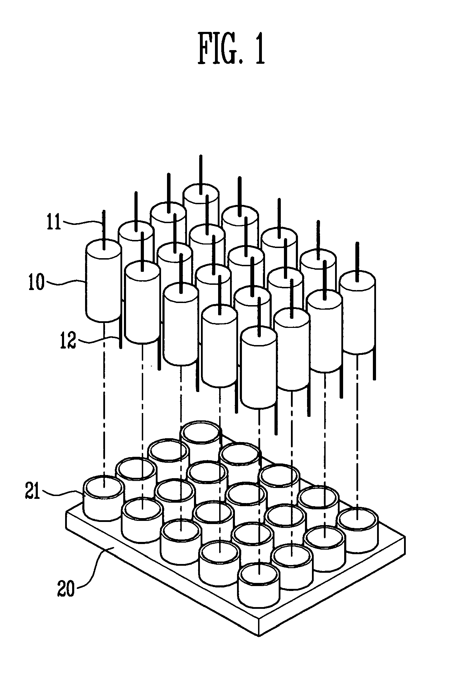

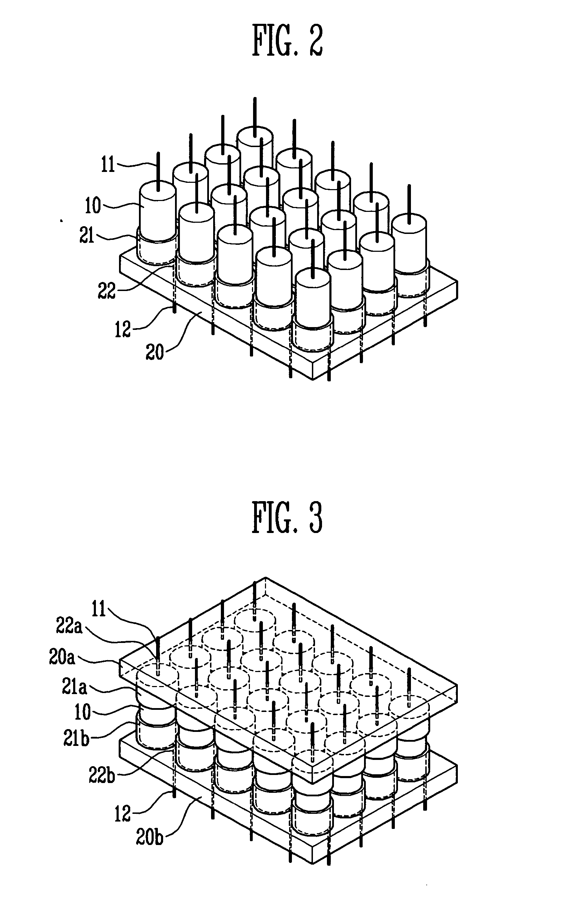

FIG. 1 is an exploded perspective view illustrating insulator and jelly-rolls and FIG. 2 is a perspective view illustrating a state where the jelly-rolls and the insulator of FIG. 1 are coupled with each other.

Referring to FIGS. 1 and 2, a medium and large secondary battery includes an insulator 20 on which a plurality of circular jelly-rolls 10 can be mounted. The insulator 20 is formed with spacers 21 that can surround and support the lower side surface of the plurality of jelly-rolls 10, wherein the spacer 21 is protruded to the upper portion of the insulator 20 and may be a shape that has a space in the protruding portion, into which the lower portion of the jelly-roll 10 is inserted. In addition, the spacer 21 is positioned at a predetermined interval so that the plurality of jelly-roll 10 can be arranged and fixed at a predetermined interval. Herein, the spacer 21 is not limited to a length protruded to the upper portion of the insulator 20, but preferably extends to a length that can firmly fix at least jelly-roll 10.

In the circular jelly-roll 10, a first tap is drawn out to the upper portion and a second tap is drawn out to the lower portion. For convenience, the first tap drawn out to the upper portion is referred to as an anode tap 11 and the second tap drawn out to the lower portion is referred to as a cathode tap 12.

A hole 22 exposing the cathode tap 12 drawn out to the lower portion of the jelly-roll 10 to the outside is formed at a position where the spacers 21 of the insulator are formed, such that the cathode tap 12 is exposed to the outside through the holes 22 of the insulator 20 when the jelly-roll 10 is inserted into the spacer 21. The plurality of cathode taps 12 are exposed and aligned by the holes 22 and then, can be easily welded to the cans.

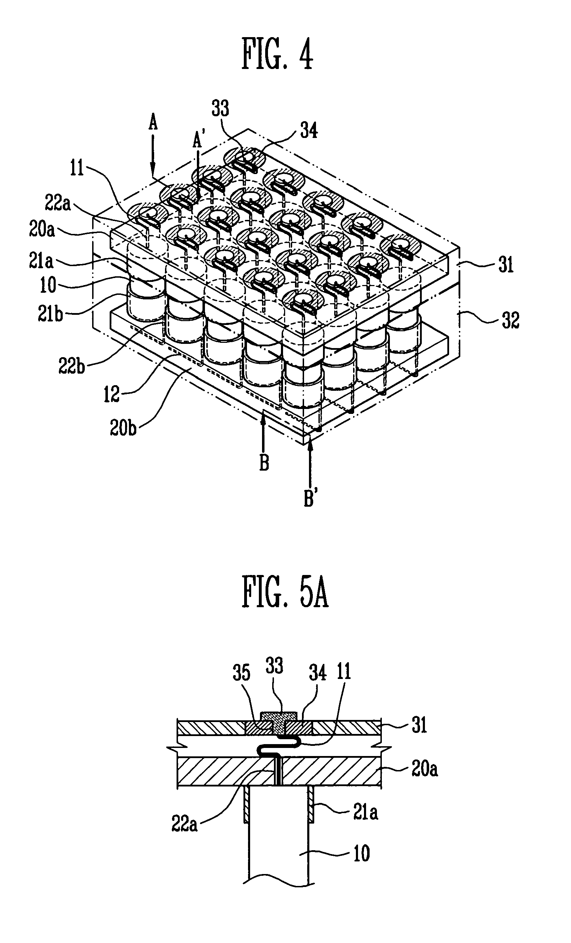

The insulator 20 mounted to be so that the lower side surfaces of the plurality of jelly-rolls 10 are surrounded by the spacers 21 is inserted into the can later. The case where the insulator 20 in which the plurality of jelly-rolls 10 are mounted are inserted into the cans and thus, the cans are welded to the anode tap 11 and the cathode cap 12 will be described below with reference to FIGS. 4 to 5b. Although not shown in the drawings, the insulator 20 may be positioned only at the upper portions of the plurality of jelly-rolls 10.

At this time, the number of the spacer formed in the insulator 20 is not limited and the insulator 20 may be formed in a form that more than two jelly-rolls 10 are coupled and combined. Further, the insulator 20 may be made of polypropylene, polyethylene, polyimide, etc.

Briefly describing the circular jelly-roll 10, the jelly-roll 10 is configured to include an anode plate having an anode active material layer coated on a surface of an anode collector, a cathode having a cathode active material layer on a surface of a cathode collector, and a separator that is positioned between the anode plate and the cathode plate and wound to electrically insulate the anode plate and the cathode plate.

The anode plate includes a metal thin plate with excellent conductivity, for example, an anode collector made of an aluminium (AI) foil, and an anode active layer coated on both sides thereof. Both ends of the anode plate are formed with the anode collector region in which the anode active material layer is not formed, that is, an anode non-coated part. One end of the anode non-coated part is bonded to the anode tap 11, wherein the anode tap 11 is generally made of an aluminium (AI) material and is protruded to the upper portion of the jelly-roll 10 by a predetermined length.

In addition, the cathode plate includes the cathode collector made of a metal thin plate, for example, a copper (Cu) or nickel (Ni) foil and the cathode active material layer coated on both sides thereof. Both ends of the cathode plate are formed with the cathode collector region in which the anode active material layer is not formed, that is, the cathode non-coated part. One end of the cathode non-coated part is bonded to the cathode tap 12, wherein the cathode tap 12 is generally made of a nickel (Ni) material and is protruded to the lower portion of the jelly-roll 10 by a predetermined length.

FIG. 3 is a perspective view illustrating a state where the insulator and the jelly-rolls are coupled with each other and FIG. 4 is a perspective view illustrating the secondary battery.

Referring to FIGS. 3 and 4, the insulator 20 is positioned on the upper and lower portions of the plurality of jelly-rolls 10, thereby making it possible to fix the positions of the anode taps 11 protruded to the upper portions of the jelly-rolls 10 and the cathode taps 12 protruded to the lower portions of the jelly-rolls 10, respectively. The upper portions of the plurality of jelly-rolls 10 are inserted into the first spacers 21 a that are integrally formed with the first insulator 20a and the lower portions of the plurality of jelly-rolls 10 are inserted into the second spacers 21 b that are integrally with the second insulator 20b. The first and second spacers 21 a and 21 b are protruded to the jelly-rolls 10 from the first insulator 20a and the second insulator 20b, respectively and have a space in the protruding portion, into which the ends of the jelly-rolls 10 can be inserted. The first spacer 21 a and the second spacer 21b are formed in a symmetrical structure.

The first spacer 21 a is inserted with the upper portion of the jelly-roll 10 and is formed with a first hole 22a to expose the anode taps 11 to the outside and the second spacer 21 b is inserted with the lower portion of the jelly-roll 10 and is formed with a second hole 22b to expose the cathode taps 12 to the outside.

As a result, the anode taps 11 on the upper portions of the jelly-rolls 10 and the cathode taps 12 on the lower portions of the jelly-rolls 10 that are coupled to the first insulator 20a and the second insulator 20b, respectively, are exposed through the first hole 22a and the second hole 22b. The insulators 20a and 20b on which the plurality of jelly-rolls 10 are mounted are inserted into the cans 32 and a cap plate 31 is covered on the upper portion. At this time, the anode taps 11 exposed through the first hole 22a is welded to anode leads 33 formed on the cap plate 31 covering the upper portion of the can 32 and the cathode taps 12 exposed through the second hole 22b are welded to the inner face of the can 32.

The region where the anode leads 33 contacts the cap plate 31 is formed with a gasket 34, such that the anode leads 33 and the cap plate 31 can be insulated from each other. The position of the first hole 22a formed in the first insulator 20a is arrayed to be conform to the positions of the anode leads 33, thereby making it possible to easily perform the welding of the anode leads 33 and the anode taps 11. Although the embodiment of the present invention describes the case where the can 32 and the cap plate 31 are negative, they may have polarity opposite thereto.

When the insulators 20a and 20 are formed on the upper and lower portions of the plurality of jelly-rolls, the insulators 20a and 20b may be integrally formed up and down. Further, although not shown in the drawings, the first insulator 20a and the second insulator 20b are further provided with a mutual coupling structure, for example, a connection structure of a hook and a groove, thereby making it possible to reinforce the strength of the battery module.

Thereby, the plurality of jelly-rolls 10 are arrayed and fixed at a predetermined position, such that the anode taps 11 and the cathode taps 12 of the plurality of jelly-rolls 10 can be accurately positioned at a welding position of the can 32 and the cap plate 31. That is, the insulators 20a and 20b inserted into the can 32 are formed with the spacers 21 a and 21 b that can fix each jelly-roll 10 at the accurate position in the can 32, such that each of the anode taps 11 and the cathode taps 12 of the jelly-rolls 10 can be easily welded to the cap plate 31 and the can. Thereby, when welding the plurality of jell-rolls, the accurate positioning and assembling are simplified such that it is easy to manufacture the battery cell, thereby making it possible to increase the structural stability of the module. In addition, it can protect the jelly-roll 10 having low mechanical strength and prevent the deformation of the jelly-roll 10.

FIG. 5A is a cross-sectional view taken along line A-A' of FIG. 4.

Referring to FIG. 5A, the anode tap 11 drawn out to the upper portion of the jelly-roll 10 mounted in the first spacer 21 a is exposed through the first hole 22a of the first insulator 20a. The exposed anode tap 11 is welded to the anode lead 33 in the bent state not to contact the cap plate 31. At this time, the anode lead 33 is insulated from the cap plate 31 by the gasket 34 and the central portion of the gasket 34 is formed with an insertion hole 35 into which the anode lead 33 can be inserted such that the anode lead 33 can contact the anode tap 11.

As described above, the first hole 22a formed in the first insulator 20a fixes the position of the anode tap 11, such that the anode lead 33 and the anode tap 11, which are arrayed in a predetermined interval, can be easily welded.

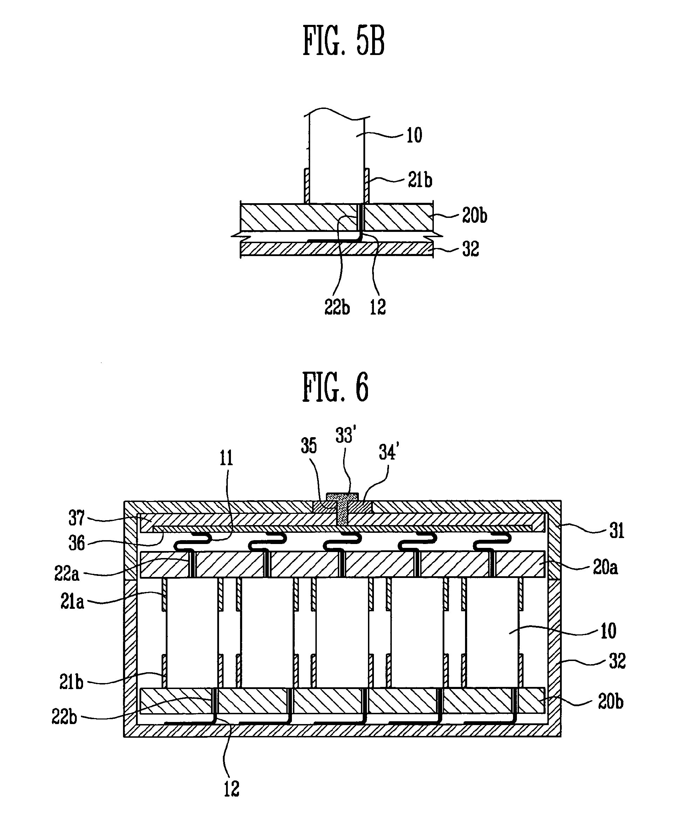

FIG. 5B is a cross-sectional view taken along line B-B' of FIG. 4.

Referring to FIG. 5B, the cathode tap 12 drawn out to the lower portion of the jelly-roll 10 mounted in the spacer 21 is exposed through the second hole 22b of the second insulator 20b. In the embodiment of the present invention, since the can 32 itself is negative, the cathode tap 12 exposed through the second hole 22b is welded to the lower inner face of the can 32 in the bent state.

The second insulator 20b is not a separate structure but the lower portion of the can 32 may have the shape of the second insulator 20b. In this case, the cathode tap 12 can be inserted into the second hole 22b while the jelly-roll 10 is inserted into the can 32.

FIG. 6 is a perspective view illustrating a battery module according to the present invention;

Referring to FIG. 6, the structure that the cathode tap 12 and the can 32 of the battery module according to the third embodiment of the present invention are welded is the same as the battery module of FIG. 4. However, the structure has the different in the form that the anode tap 11 and an anode lead 33' formed on the cap plate 31 are welded. After the anode taps 11 drawn out to the upper portion of the first insulator 20a are each welded to a connection body 36, the anode taps 11 and the anode lead 33' are electrically connected to each other by the welding at the region where the connection body 36 contacts one anode lead 33' positioned in the insertion hole 35. Thereby, only one anode lead 33' is formed at the outside of the cap plate 31, thereby making it possible to form the battery module having a simpler structure.

At this time, a gasket 34' is formed at the region where the cap plate 31 contacts the anode lead 33' so that the cap plate 31 can be insulated from the anode lead 33'. An insulating plate 37 is further formed between the connection body 36 and the cap plate 31 so that the connection body 36 having positive polarity and the cap plate 31 having negative polarity can be insulated from each other.

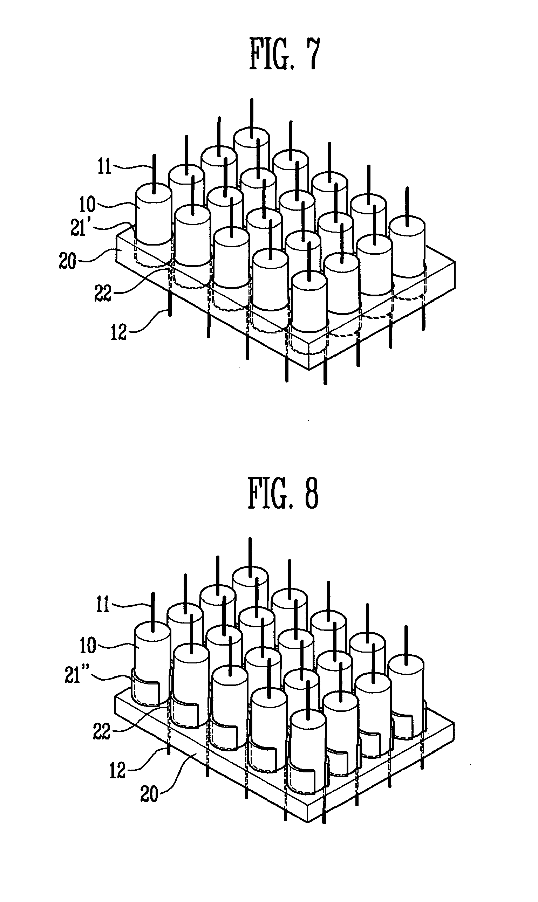

FIG. 7 is an exploded perspective view illustrating a state where the insulator and the jelly-rolls are coupled with each other;

Referring to FIGS. 7, the medium and large battery module includes the insulator 20 on which the plurality of circular jelly-rolls 10 can be mounted. The insulator 20 is formed with the spacers 21 that can surround and support the lower side surface of the plurality of jelly-rolls 10, wherein the spacer 21 is formed by groove shape which is depressed into an upper surface of the insulator, such that the lower portion of the jelly-roll 10 can be inserted into the groove. The depth of the groove may be formed at the depth that can firmly fix the jelly-roll 10 while surrounding the lower side face of the jelly-roll 10.

The hole 22 exposing the cathode tap 12 drawn out to the lower portion of the jelly-roll 10 to the outside is formed at a position where the spacers 21 of the insulator are formed, such that the cathode tap 12 is exposed to the outside through the holes 22 of the insulator 20 when the jelly-roll 10 is inserted into the spacer 21. The plurality of cathode taps 12 are exposed and aligned by the holes 22 and then, can be easily welded to the cans.

As described above, the insulator 20 in the state where the plurality of jelly-rolls are mounted in the spacers 21 is inserted into the can, such that the jelly-roll 10 can be fixed at more accurate position.

FIG. 8 is an exploded perspective view illustrating a state where the insulator and the jelly-rolls are coupled with each other;

Referring to FIG. 8, the spacers 21 that can surround and support only the lower portions of the plurality of jelly-rolls 10 are formed at the insulator 20. More specifically, the spacer 2 is protruded to the upper portion of the insulator 20, has a space in the protruding portion, into which the lower portion of the jelly-roll 10 can be inserted, and may be formed in a structure that surrounds a portion of the lower side surface of the jelly-roll 10 and opens a portion thereof. In other words, the spacer 21 may be formed only at a minimum position that can support the jelly-roll 10.

As another form that the spacer 21 supports only a portion of the jelly-roll 10, there may be a form that the portion contacting the lower side face of the jelly-roll 10 and the portion not contacting the lower side surface of the jelly-roll 10 can be repeatedly formed at a predetermined interval.

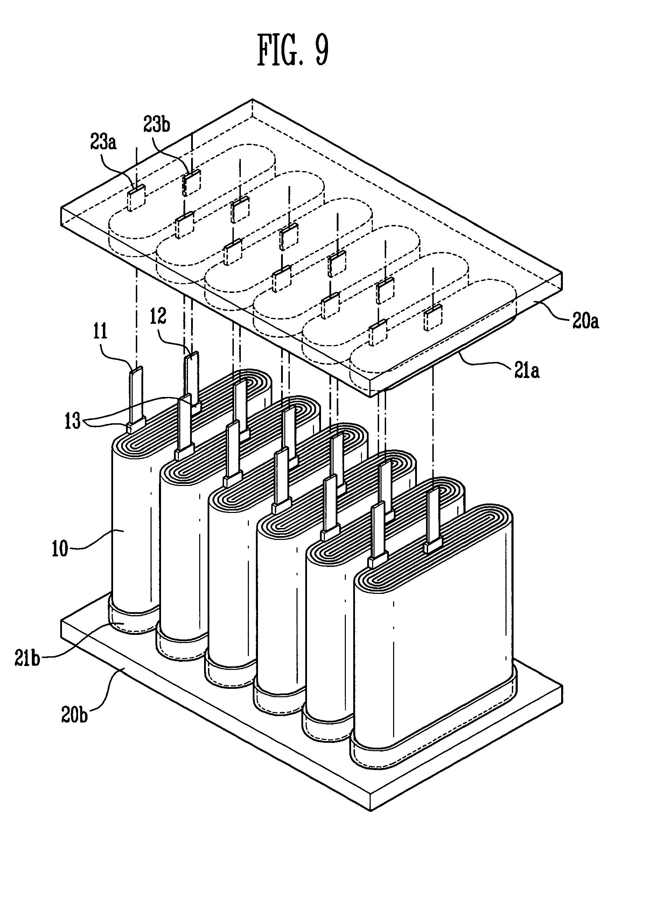

FIG. 9 is a perspective view illustrating a state where the insulator and the jelly-rolls are coupled with each other.

Referring to FIG. 9, in a medium and large battery module according to the sixth embodiment of the present invention, the insulator 20 capable of being equipped with the plurality of polygonal jelly rolls 10 is inserted in the can (not shown). The insulator 20 includes the first insulator 20a disposed above the jelly rolls 10 and the second insulator 20b disposed under the jelly rolls 10. First, these pacers 21a surrounding and supporting the upper portion of the jelly rolls 10 are formed on the first insulator 20a and the second spacers 21 b surrounding and supporting the lower portion of the jelly rolls 10 are formed on the second insulator 20b.

In this structure, the first and second spacers 21 a and 21 b protrude from the first and second insulators 20a and 20b, respectively, and spaces where the jelly rolls 10 can be inserted are defined therein. In this configuration, the spacers 21 a and 21 b may be formed in a shape partially supporting the jelly rolls 10, as shown in FIG. 8.

Since the polygonal jelly roll 10 has the anode tap 11 and the cathode tap both protruding upward, the first hole 23a and the second hole 23b may be further formed at the region where the first space 21 a of the first insulator 20a to expose the anode tap 11 and the cathode tap 12 to the outside. Since the anode tap 11 and the cathode tap 12 exposed through the first hole 23a and the second hole 23b are aligned with the welding position to the can, it is possible to easily weld them to the can.

In this embodiment, although the first and second spacers 21a and 21b protrude from the first and second insulators 20a and 20b, respectively, they may be grooves depressed into the upper surface of the first and second insulators 20a and 20b. Further, since both of the anode tap 11 and the cathode tap 12 protrude upward from the jelly roll 10, the insulator may be provided at the upper portion.

Explaining simply the polygonal jelly rolls 10, the polygonal jelly roll 10 is wound around a separator disposed between an anode plate and a cathode plate. The anode tap 11 is connected to the anode plate to protrude from the top of the jelly roll 10 and the cathode tap 12 is connected to the cathode plate to protrude from the top of the jelly roll 10. The anode tap 11 and cathode tap 12 are disposed at a predetermined from each other and electrically connected in the jelly roll 10. Further, a lamination tap 13 may be wounded around the connection portion of the cathode tap 11 and the anode tap 12 with the jelly roll 10. The lamination tape 13 intercepts heat generated from the anode tap 11 or the cathode tap 12 and prevents the edge of the anode tap 11 or the cathode tap from pressing the jelly roll 10.

Although the holes are formed in the insulator to expose the electrode taps in the above embodiments, through-holes for discharging heat generated from the jelly rolls to the outside may be further formed.

## Claims

1. A secondary battery comprising:
a plurality of jelly-rolls (10) comprising an anode, a cathode and a separator placed there between, wherein each jelly-roll (10) includes first and second electrode tabs (11, 12) extending from the jelly-roll (10);
at least one insulator plate (20, 20a, 20b) having at least one hole (22, 22a, 22b) through which at least one of the electrode tabs (11, 12) passes and wherein the insulator plate (20, 20a, 20b) comprises a spacer (21) for each jelly-roll (10) so as to fix the jelly-rolls (10) in a predetermined position; and
a battery case (32) and a cap plate assembly enclosing the at least one insulator plate (20a, 20b) and jelly-rolls (10), wherein the second electrode tab (12) of each jelly-roll (10) contacts the battery case (32), and the first electrode tab (11) of each jelly-roll (10) contacts the cap plate assembly.

2. The secondary battery of claim 1, wherein the jelly-rolls (10) have a circular shape or a polygonal shape.

3. The secondary battery of claim 1 or 2, wherein the spacers (21, 21 a, 21 b) protrude from one side of the insulator plate (20, 20a, 20b).

4. The secondary battery of claim 1 or 2, wherein the spacers (21, 21a, 21 b) are depressed into one side of the insulator plate (20, 20a, 20b).

5. The secondary battery of any of the preceding claims, wherein the battery includes first and second insulator plates (20a, 20b) and the jelly-rolls (10) are positioned in between the first and second insulator plates (20a, 20b).

6. The battery of claim 1, wherein the cap plate assembly comprises:
a cap plate (31); and
an electrode lead (33) for each jelly-roll (10), wherein the first electrode tab (11) of each jelly-roll (10) contacts the corresponding electrode lead (33).

7. The battery of claim 1, wherein the cap plate assembly comprises:
a connection body (36), wherein the first electrode tab (11) of each jelly-roll (10) contacts the connection body (36); and
an electrode lead (33) is connected to the connection body (36).

8. The battery of claim 7, wherein the cap plate assembly further comprises an insulator plate (37) formed between the connection body (36) and the cap plate (31).

9. The battery of any one of claims 1 and 6 through 8, wherein the cap plate assembly has a gasket (34) so as to insulate the electrode lead (33) from the cap plate (31).

10. The battery of any one of the preceding claims, wherein one insulator plate (20a) comprises all the holes (23a, 23b) for the first and second electrode tabs (11, 12) of each jelly-roll (10).

## Patentansprüche

1. Sekundärbatterie, aufweisend:
eine Vielzahl von gewickelten Rollen ("jelly rolls") (10), die eine Anode, eine Kathode und einen zwischen diesen positionierten Separator aufweisen, wobei jede gewickelte Rolle (10) eine erste und zweite Elektrodenfahne (11, 12) aufweist, die sich von der gewickelten Rolle (10) erstrecken;
zumindest eine Isolationsplatte (20, 20a, 20b), die zumindest ein Loch (22, 22a, 22b) aufweist, durch das zumindest eine der Elektrodenfahnen (11, 12) hindurchführt, und wobei die Isolationsplatte (20, 20a, 20b) einen Abstandshalter (21) für jede gewickelte Rolle (10) aufweist, um die gewickelten Rollen (10) in einer vorbestimmten Position zu fixieren; und
ein Batteriegehäuse (32) und eine Deckplattenanordnung, die die zumindest eine Isolationsplatte (20a, 20b) und gewickelte Rollen (10) umgibt, wobei die zweite Elektrodenfahne (12) jeder gewickelten Rolle (10) mit dem Batteriegehäuse (32) in Kontakt steht, und wobei die erste Elektrodenfahne (11) jeder gewickelten Rolle (10) mit der Deckplattenanordnung in Kontakt steht.

2. Sekundärbatterie nach Anspruch 1, wobei die gewickelten Rollen (10) eine Kreisform oder eine polygonale Form aufweisen.

3. Sekundärbatterie nach Anspruch 1 oder 2, wobei die Abstandshalter (21, 21a, 21b) von einer Seite der Isolationsplatte (20, 20a, 20b) vorragen.

4. Sekundärbatterie nach Anspruch 1 oder 2, wobei die Abstandshalter (21, 21a, 21b) in eine Seite der Isolationsplatte (20, 20a, 20b) gesenkt sind.

5. Sekundärbatterie nach einem der vorhergehenden Ansprüche, wobei die Batterie eine erste und zweite Isolationsplatte (20a, 20b) aufweist, und die gewickelten Rollen (10) zwischen der ersten und zweiten Isolationsplatte (20a, 20b) positioniert sind.

6. Batterie nach Anspruch 1, wobei die Deckplattenanordnung aufweist:
eine Deckplatte (31); und
eine Elektrodenleitung (33) für jede gewickelte Rolle (10), wobei die erste Elektrodenfahne (11) jeder gewickelten Rolle (10) mit der entsprechenden Elektrodenleitung (33) in Kontakt steht.

7. Batterie nach Anspruch 1, wobei die Deckplattenanordnung aufweist:
einen Verbindungskörper (36), wobei die erste Elektrodenfahne (11) jeder gewickelten Rolle (10) mit dem Verbindungskörper (36) in Kontakt steht; und
eine Elektrodenleitung (33) mit dem Verbindungskörper (36) verbunden ist.

8. Batterie nach Anspruch 7, wobei die Deckplattenanordnung weiterhin eine Isolationsplatte (37) aufweist, die zwischen dem Verbindungskörper (36) und der Deckplatte (31) ausgebildet ist.

9. Batterie nach einem der Ansprüche 1 und 6 bis 8, wobei die Deckplattenanordnung eine Dichtung (34) aufweist, um die Elektrodenleitung (33) von der Deckplatte (31) zu isolieren.

10. Batterie nach einem der vorhergehenden Ansprüche, wobei eine Isolationsplatte (20a) alle Löcher (23a, 23b) für die erste und zweite Elektrodenfahne (11, 12) jeder gewickelten Rolle (10) aufweist.

## Revendications

1. Batterie secondaire, comprenant :
une pluralité d'enroulements "en gâteau roulé" (10), comprenant une anode, une cathode et un séparateur disposé entre celles-ci, chaque enroulement "en gâteau roulé" (10) comprenant des première et deuxième pattes d'électrode (11, 12) s'étendant à partir de l'enroulement "en gâteau roulé" (10) ;
au moins une plaque d'isolateur (20, 20a, 20b) comportant au moins un trou (22, 22a, 22b) à travers lequel passe au moins l'une des pattes d'électrode (11, 12), et la plaque d'isolateur (20, 20a, 20b) comprenant un élément d'espacement (21) pour chaque enroulement "en gâteau roulé" (10) de façon à fixer les enroulements "en gâteau roulé" (10) dans une position prédéterminée ; et
un boîtier de batterie (32) et un ensemble de plaque de capuchon renfermant la au moins une plaque d'isolateur (20a, 20b) et les enroulements "en gâteau roulé" (10), la deuxième patte d'électrode (12) de chaque enroulement "en gâteau roulé" (10) venant en contact avec le boîtier de batterie (32), et la première patte d'électrode (11) de chaque enroulement "en gâteau roulé" (10) venant en contact avec l'ensemble de plaque de capuchon.

2. Batterie secondaire selon la revendication 1, dans laquelle les enroulements "en gâteau roulé" (10) ont une forme circulaire ou une forme polygonale.

3. Batterie secondaire selon la revendication 1 ou 2, dans laquelle les éléments d'espacement (21, 21a, 21b) font saillie à partir d'un côté de la plaque d'isolateur (20, 20a, 20b).

4. Batterie secondaire selon la revendication 1 ou 2, dans laquelle les éléments d'espacement (21, 21a, 21b) sont enfoncés à l'intérieur d'un côté de la plaque d'isolateur (20, 20a, 20b).

5. Batterie secondaire selon l'une quelconque des revendications précédentes, dans laquelle la batterie comprend des première et deuxième plaques d'isolateur (20a, 20b) et les enroulements "en gâteau roulé" (10) sont positionnés entre les première et deuxième plaques d'isolateur (20a, 20b).

6. Batterie selon la revendication 1, dans laquelle l'ensemble de plaque de capuchon comprend :
une plaque de capuchon (31) ; et
un conducteur d'électrode (33) pour chaque enroulement "en gâteau roulé" (10), la première patte d'électrode (11) de chaque enroulement "en gâteau roulé" (10) venant en contact avec le conducteur d'électrode correspondant (33).

7. Batterie selon la revendication 1, dans laquelle l'ensemble de plaque de capuchon comprend :
un corps de connexion (36), la première patte d'électrode (11) de chaque enroulement "en gâteau roulé" (10) venant en contact avec le corps de connexion (36) ; et
un conducteur d'électrode (33) qui est connecté au corps de connexion (36).

8. Batterie selon la revendication 7, dans laquelle l'ensemble de plaque de capuchon comprend de plus une plaque d'isolateur (37) formée entre le corps de connexion (36) et la plaque de capuchon (31).

9. Batterie selon l'une quelconque des revendication 1 et 6 à 8, dans laquelle l'ensemble de plaque de capuchon comporte un joint d'étanchéité (34) de façon à isoler le conducteur d'électrode (33) vis-à-vis de la plaque de capuchon (31).

10. Batterie selon l'une quelconque des revendications précédentes, dans laquelle une plaque d'isolateur (20a) comprend tous les trous (23a, 23b) pour les première et deuxième pattes d'électrode (11, 12) de chaque enroulement "en gâteau roulé" (10).
